# FASCICULE DE BREVET EUROPEEN

(11) **EP 1 538 056 B1**
(45) Date de publication et mention de la délivrance du brevet: **07.03.2007**
(21) Numéro de dépôt: 04300810.1
(22) Date de dépôt: 24.11.2004
(51) Int. Cl.: B61F 5/30

(54) **Dispositif de liaison souple entre un longeron et une boîte d'essieu**
Vorrichtung für eine Weichverbindung zwischen einer Wange und einer Achsbüchse
Device for a soft connection between a frame girder and an axle-box

(30) Priorité: 02.12.2003 FR 0350958
(43) Date de publication de la demande: 08.06.2005
(73) Titulaire: Alstom, 92300 Levallois Perret (FR)
(72) Inventeur: LANDROT, Alain, 71200, LE CREUSOT (FR)
(74) Mandataire: Neyret, Daniel Jean Marie

(56) Documents cités:
- EP-A- 0 326 179
- EP-A- 0 542 722
- EP-A- 0 983 922
- FR-A- 1 253 350
- FR-A- 1 536 401
- GB-A- 835 010
- GB-A- 935 841

## Description

La présente invention concerne les bogies de véhicule ferroviaire et plus particulièrement la liaison entre le longeron et la boite d'essieu.

Classiquement cette liaison est réalisée par un ressort hélicoïdal couplé à un amortisseur qui assure l'amortissement des chocs ou des déplacements transmis par le châssis sur la structure du bogie.

Il existe d'autres types de ressorts, comme celui décrit dans le brevet FR 1 536 401, qui présentent une souplesse déterminée en compression, une grande souplesse en cisaillement et une certaine stabilité latérale.

Cependant cette construction est lourde et pénalise les performances des bogies qui en sont équipés.

On connaît également des liaisons directes entre l'essieu et le longeron (et non la boite d'essieu) réalisées par des lames de ressort métalliques ou composites qui remplacent le longerons classique. Mais ce type de lames, si elles résistent bien à la flexion, n'autorisent pas les déplacements transversaux qui sont alors répercutés directement au châssis ce qui peut entraîner des usures des fixations et des risques de casses et diminue la durée de vie de ce type de bogies.

De telles usures peuvent apparaîtrent par exemple dans le bogie décrit par le brevet de la demanderesse EP 0 983 922, où le longeron constitué d'une lame élastique assure le positionnement des essieux dans la direction transversale.

L'objet de la présente invention est de proposer un dispositif de liaison qui absorbe les efforts comme les ressorts hélicoïdaux et qui soit compatible avec les lames de ressort tout en autorisant des débattements appréciables entre les pièces qu'il relie.
1. Le dispositif de liaison souple selon l'invention est disposé entre un longeron flexible de châssis de bogie et un bras de boite d'essieu, il est caractérisé en ce que la raideur de la liaison est plus grande dans la direction verticale (Z) que dans les deux autres directions horizontales (X, Y). Ce qui permet de découpler le longeron de la boite d'essieu et donc de réduire les sollicitations aux interfaces de ces pièces quand le châssis de bogie se déplace transversalement et verticalement par rapport aux essieux. Cela présente donc l'avantage d'autoriser les déplacements relatifs entre le longeron qui est flexible et la boite d'essieu. Cette disposition permet en particulier dans la direction Y de ne pas répercuter des efforts sur la lame et d'éviter des dommages sur la structure du châssis.

Selon une caractéristique particulière, la liaison est en élastomère. Cette matière permet de réduire la transmission des bruits par les éléments solides (bruits solidiens) du rail vers la caisse, la filtration pourra aller jusqu'à 1,5 à 2KHz. Par ailleurs le positionnent très en amont de cet élastomère arrête les bruits solidiens, c'est à dire les bruits provoqués par les solides, beaucoup plus en amont qu'une suspension classique où le bruit n'est arrêté qu'au niveau de l'amortissement secondaire ou de la suspension secondaire ce qui concerne donc beaucoup plus de pièces et des pièces beaucoup plus volumineuses donc plus difficiles à filtrer.

Avantageusement l'élastomère est un élastomère lamellé à armature métallique plane. Ce type d'élastomère est beaucoup plus compact tout en ayant une plus grande souplesse dans le plan horizontal.

Selon une variante, la liaison est réalisée en caoutchouc naturel. Le coût de ce matériau est relativement faible. Il est également plus souple. La raideur étant fonction de l'épaisseur, le caoutchouc sera en forme de bloc.

Ces types de liaison en élastomère ou en caoutchouc naturel permettent également un réglage de la suspension par ajout de cales lors du tarage du bogie ou la modification de la raideur verticale par l'ajout d'un autre élément en caoutchouc ou élastomère lamellé ou non.

Selon une caractéristique particulière, le longeron flexible est réalisé en matériau composite. Le dispositif peut être vissé sur des plaques métalliques collées sur ledit longeron. L'utilisation d'un matériau composite permet un gain important de poids et autorise le collage des pièces.

Selon une autre caractéristique, le longeron flexible fait office de suspension primaire du bogie. Ce qui permet au dispositif de transférer exclusivement la charge verticale sur les essieux. Les déplacements relatifs entre le longeron flexible et la boîte d'essieu pour corriger la longueur d'appui lors des variations de charge, dus à la flexion du longeron n'ont pas besoin d'être absorbés par l'utilisation d'articulations coûteuses et soumis à usure comme des jumelles, technique couramment employée pour la fixation des lames de ressort dans les véhicules routiers.

L'invention sera mieux comprise à la lecture de la description qui va suivre donnée uniquement à titre d'exemple et faite en se référant aux dessins annexés dans lesquels :
- la figure 1 est une vue en perspective du dispositif selon l'invention avec des parties transparentes,

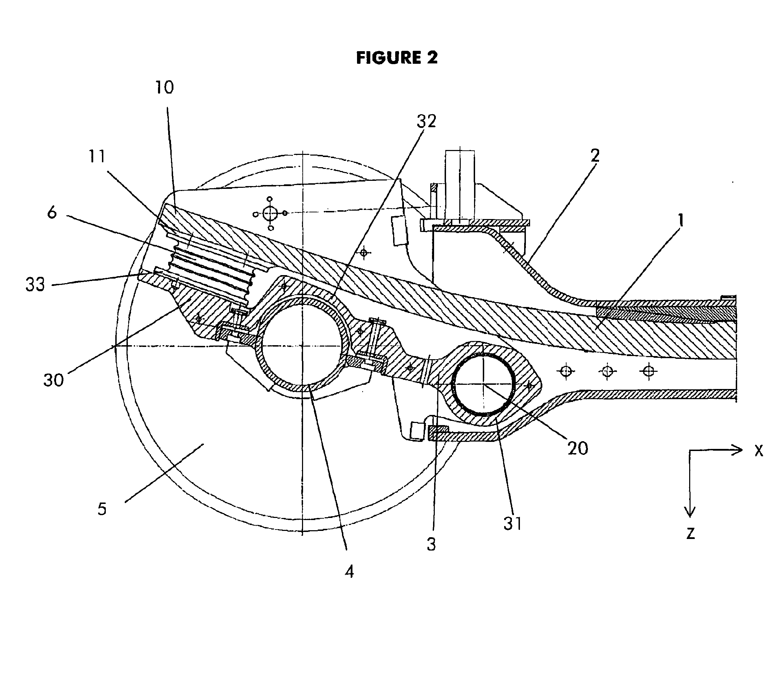

- la figure 2 est une vue de coté du dispositif selon l'invention,

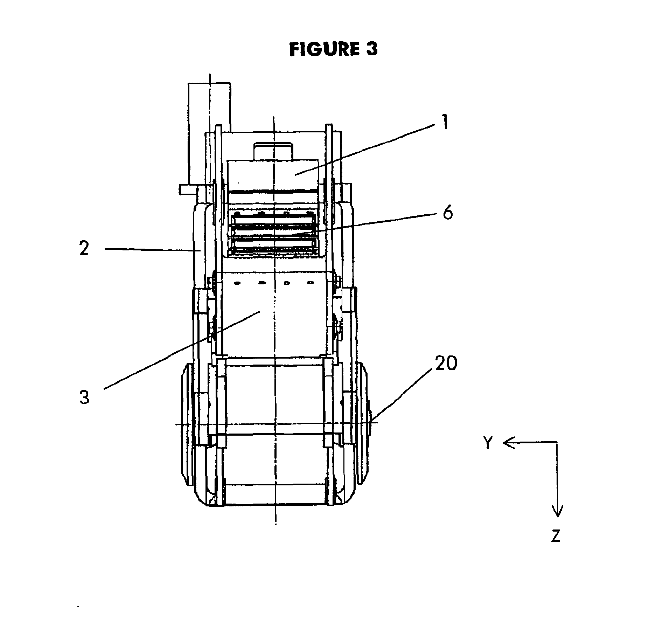

- la figure 3 est une vue de face du dispositif selon l'invention.

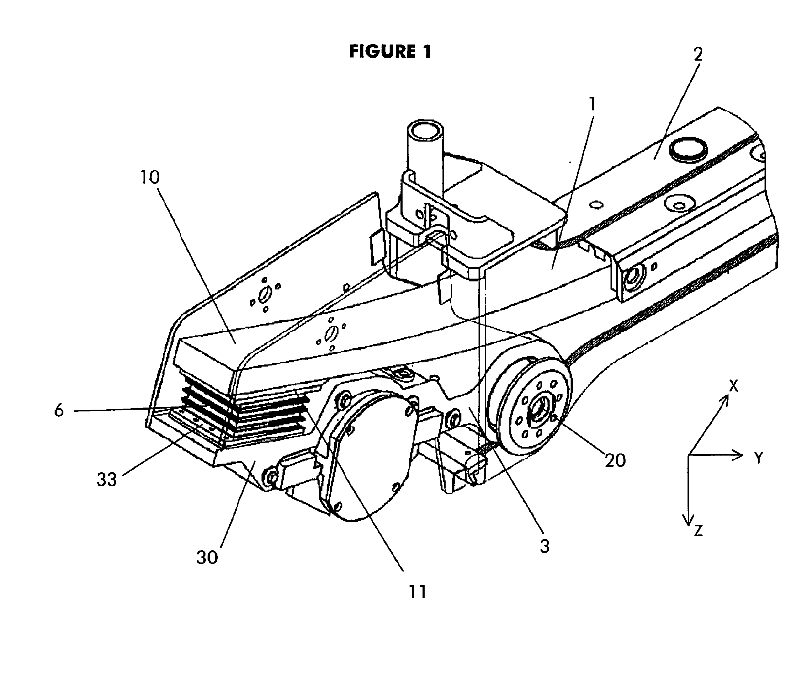

Le bogie est symétrique et comprend deux longerons, constitués par les lames élastiques 1 disposées dans une structure 2 comme on le voit à la figure 1, une boite d'essieu 3 à chaque extrémité du bogie et sur chacune desquelles est placé l'essieu 4 avec ses deux roues 5.

Entre chaque lame 1 et l'extrémité 30 de la boite d'essieu 3 est inséré une liaison 6. Cette liaison est réalisée en élastomère lamellé dans l'exemple représenté sur les différentes figures.

La lame 1 est fixé à la structure 2 par soudure, vissage ou collage ou tout autre dispositif connu par l'homme du métier.

La boite d'essieu ou boite à bras 3 est articulée sur la structure 2 par l'intermédiaire d'un axe 20 d'un coté 31 de l'âme principale, l'essieu 4 est fixé de façon classique à la boite 3 dans la partie intermédiaire 32 de l'âme et la liaison de l'autre extrémité 30 de l'âme. L'âme principale est constituée des parties 30, 31 et 32 et elle est aussi appelée âme de la boite à bras.

L'élément de liaison 6 est boulonné d'un coté sur une plaque 11 rendue solidaire de la lame 1 par collage et de l'autre sur une plaque 33 solidaire de la boite d'essieu 3. Il est possible de remplacer le boulonnage de la plaque 11 par un positionnement par 4 pions (par exemple) puisque par construction l'élément 6 est toujours comprimé entre la lame 1 et la boite 3.

Quand le bogie est chargé, la lame 1 fléchie dans la direction verticale Z, l'extrémité 10 de la lame 1 se déplace horizontalement dans la direction horizontale X et l'élément de liaison 6 se déforme afin d'absorber la variation de longueur des appuis tout en conservant l'effort vertical sur la partie supérieure de la boite d'essieu 3.

Lors de sollicitations transversales, comme le passage de courbes ou d'aiguillage, la boîte d'essieu 3 est sollicitée par des efforts horizontaux dirigés dans la direction transversale Y. La grande rigidité transversale de la lame 1 entraîne une déformation horizontale de l'élément de liaison 6 qui est plus souple.

## Revendications

1. Dispositif de suspension de bogie comportant un longeron flexible (1) de châssis (2) de bogie, une boite d'essieu (3) et une liaison souple (6) entre ledit longeron flexible (1) et ladite boite d'essieu (3) **caractérisé en ce que** ladite boite d'essieu (3) est articulée sur ledit châssis (2) de bogie dans la direction transversale (Y) de manière à se déplacer dans ladite direction transversale et **en ce que** ladite liaison souple (6) a une raideur plus grande dans la direction verticale (Z) que dans les deux autres directions horizontales (X, Y)

2. Dispositif selon la revendication 1, **caractérisé en ce que** la liaison (6) est en élastomère.

3. Dispositif selon la revendication 2, **caractérisé en ce que** l'élastomère est un élastomère lamellé à armature métallique plane.

4. Dispositif selon la revendication 1 , **caractérisé en ce que** la liaison (6) est réalisée en caoutchouc naturel.

5. Dispositif selon une des revendications 1 à 4, **caractérisé en ce que** le longeron (1) est réalisé en matériau composite.

6. Dispositif selon la revendication 5, **caractérisé en ce qu'**il est vissé sur des plaques métalliques collées sur le longeron (1).

7. Dispositif selon une des revendications 1 à 6, **caractérisé en ce que** le longeron flexible (1) fait office de suspension primaire du bogie.

## Claims

1. Bogie suspension device comprising a flexible beam (1) of a bogie frame (2), an axle box (3) and a flexible connection (6) between said flexible beam (1) and said axle box (3), **characterised in that** said axle box (3) is articulated on said bogie frame (2) in the transverse direction (Y) so as to move in said transverse direction, and **in that** said flexible connection (6) has a greater stiffness in the vertical direction (Z) than in the two other, horizontal directions (X, Y).

2. Device according to Claim 1, **characterised in that** the connection (6) is made of elastomer.

3. Device according to Claim 2, **characterised in that** the elastomer is a laminated elastomer with flat metal reinforcement.

4. Device according to Claim 1, **characterised in that** the connection (6) is made of natural rubber.

5. Device according to one of Claims 1 to 4, **characterised in that** the beam (1) is made of composite material.

6. Device according to Claim 5, **characterised in that** it is screwed to metal plates adhesively bonded to the beam (1).

7. Device according to one of Claims 1 to 6, **characterised in that** the flexible beam (1) acts as the primary suspension of the bogie.

## Patentansprüche

1. Drehgestell-Aufhängung mit einem flexiblen Längsträger (1) des Drehgestell-Chassis (2), einem Achsgehäuse (3) und einer elastischen Verbindung (6) zwischen dem besagten flexiblen Längsträger (1) und dem besagten Achsgehäuse (3), **dadurch gekennzeichnet, dass** das besagte Achsgehäuse (3) in Querrichtung (Y) an dem besagten Drehgestell-Chassis (2) derart angelenkt ist, um sich in die besagte Querrichtung zu verschieben, und dass die besagte elastische Verbindung (6) in der senkrechten Richtung (2) eine größere Steifigkeit aufweist als in den beiden anderen horizontalen Richtungen (X, Y).

2. Aufhängung nach Anspruch 1, **dadurch gekennzeichnet, dass** die Verbindung (6) aus Elastomer besteht.

3. Aufhängung nach Anspruch 2, **dadurch gekennzeichnet, dass** das Elastomer ein lamellenförmiges Elastomer mit ebener Metallarmierung ist.

4. Aufhängung nach Anspruch 1, **dadurch gekennzeichnet, dass** die Verbindung (6) aus Naturkautschuk besteht.

5. Aufhängung nach einem der Ansprüche 1 bis 4, **dadurch gekennzeichnet, dass** der Längsträger (1) aus einem Verbundmaterial besteht.

6. Aufhängung nach Anspruch 5, **dadurch gekennzeichnet, dass** sie an Metallplatten festgeschraubt ist, die auf dem Längsträger (1) kleben.

7. Aufhängung nach einem der Ansprüche 1 bis 6, **dadurch gekennzeichnet, dass** der flexible Längsträger (1) als primäre Aufhängung des Fahrgestells dient.
